# EUROPEAN PATENT APPLICATION

(11) **EP 4 641 764 A1**
(43) Date of publication of application: **29.10.2025**
(21) Application number: 25171021.6
(22) Date of filing: 16.04.2025
(51) Int. Cl.: H01M 10/613, H01M 10/647, H01M 10/6554, H01M 50/209, H01M 50/264, H01M 10/617, H01M 10/658

(54) **BATTERY PACK**

(30) Priority: 18.04.2024 KR 20240052393
(71) Applicant: SAMSUNG SDI CO., LTD., Yongin-si, Gyeonggi-do 17084 (KR)
(72) Inventor: YOO, Jaehyun, 17084 Yongin-si, Gyeonggi-do (KR); RYU, Jaelim, 17084 Yongin-si, Gyeonggi-do (KR); PARK, Soohwan, 17084 Yongin-si, Gyeonggi-do (KR); LEE, Choonghoon, 17084 Yongin-si, Gyeonggi-do (KR); AHN, Gijang, 17084 Yongin-si, Gyeonggi-do (KR)
(74) Representative: Gulde & Partner

(57) **Abstract**

Battery pack comprising: a plurality of battery cells (C) arranged in a first direction (Z1); an end plate (E) arranged on the outside of an outermost battery cell of the plurality of battery cells (C) in the first direction (Z1); a cooling plate (100) extending across bottom surfaces (12) of the plurality of battery cells (C); and an insulating block (IB) positioned at a coupling position (CP) between the end plate (E) and the cooling plate (100).

The battery pack is capable of providing a uniform temperature environment for a plurality of battery cells to eliminate or alleviate temperature variation depending on positions of the battery cells. The battery pack is also capable of eliminating or alleviating variation in electrical output characteristics due to the temperature variation. The battery pack provides a heat flow along a common first path for battery cells toward a cooling plate extending across bottom surfaces of the battery cells while suppressing heat flow along a second path from a side of the outermost battery cell among the battery cells.

## Description

### BACKGROUND

### 1. Field

One or more embodiments relate to a battery pack.

### 2. Description of the Related Art

Secondary batteries are batteries that may be discharged and recharged, unlike primary batteries that cannot be recharged. Secondary batteries may be used as an energy source for mobile devices, electric vehicles, hybrid vehicles, electric bicycles, and uninterruptible power supplies. Depending on the type of external device to which they are applied, secondary batteries may be used in the form of a single battery or in the form of a battery pack in which multiple battery cells are connected and bundled into one unit.

Small mobile devices, such as mobile phones, can operate for a certain period of time with the output and capacity of a single battery. When long-term operation or high-power operation is required, such as for larger mobile devices that consume a lot of power, such as laptops or electric or hybrid vehicles, a pack containing multiple batteries is preferred due to increased output and capacity that can be provided by a pack. Depending on the number of built-in batteries in a pack, the output voltage or output current can be increased.

### SUMMARY

One or more embodiments include a battery pack capable of providing a uniform temperature environment for a plurality of battery cells to eliminate or alleviate temperature variation depending on positions and to eliminate or alleviate variation in electrical output characteristics due to the temperature variation. The battery pack may provide a heat flow along a common first path for the plurality of battery cells toward a cooling plate extending across bottom surfaces of the plurality of battery cells while suppressing a heat flow along a second path from a side of the outermost battery cell among the plurality of battery cells to the cooling plate through an end plate. The elimination of the second path alleviates or eliminates the temperature variation depending on positions between the plurality of battery cells forming the battery pack.

Additional aspects will be set forth in the description which follows and will be apparent from the description, or may be learned by practice of the presented embodiments of the present disclosure.

According to one or more embodiments, a battery pack includes a plurality of battery cells arranged in a first direction, an end plate arranged on the outside of an outermost battery cell of the plurality of battery cells in the first direction, a cooling plate extending across bottom surfaces of the plurality of battery cells, and an insulating block positioned at a coupling position between the end plate and the cooling plate.

A coupling line where a coupling member couples the end plate and the cooling plate extends through the coupling position.

The cooling plate may extend across the bottom surface of the end plate and the bottom surfaces of the plurality of battery cells arranged in the first direction, and the bottom surface of the end plate is coupled to the top surface of the cooling plate at the coupling position such that the bottom surface of the end plate and the top surface of the cooling plate face each other.

The insulating block may include a coupling block extending a height from the top surface of the cooling plate and a receiving step is recessed to a depth from the bottom surface of the end plate, the coupling block and the receiving step are formed in complementary shapes, and the coupling block is fitted to the receiving step.

The insulating block may be formed as all or a part of the coupling block.

The insulating block may protrude from the cooling plate to the receiving step of the end plate to form all of the coupling block.

The insulating block may include a single insulating block provided on the cooling plate or at least two different insulating blocks stacked on the cooling plate.

The insulating block may be stacked on a metal block provided on the cooling plate to form a part of the coupling block, and the insulating block and the metal block protrude from the top surface of the cooling block to a height that is complementary to the depth formed by the receiving step of the end plate.

The receiving step, which is recessed to a depth from the bottom surface of the end plate, may be coupled to the coupling block, which protrudes to a certain from the top surface of the cooling plate.

The coupling block may protrude from both sides in a second direction intersecting the first direction, the receiving step of the end plate may be recessed from both sides in the second direction intersecting the first direction, and the top surface of the cooling plate between both sides of the coupling block faces the bottom surface of the end plate between both sides of the receiving step.

The insulating block may be provided at the coupling position for coupling the end plate and the cooling plate and at the facing position where the end plate faces the cooling plate.

The insulating block at the facing position may be formed on the bottom surface of the end plate that faces the top surface of the cooling plate.

The insulating block may be formed at the facing position with a thickness in a depth direction from the bottom surface of the end plate or the top surface of the cooling plate.

The insulating block may include a coupling block having height from a top surface of the cooling plate to a receiving step of the end plate that is recessed to a depth from a bottom surface of the end plate, with the coupling block and the receiving step being fitted to each other with complementary shapes, and the top surface of the cooling plate between both sides of the coupling block faces the bottom surface of the end plate between both sides of the receiving step.

The insulating block may be provided on the receiving step at the coupling position, and on the bottom surface of the end plate that faces the top surface of the cooling plate.

The insulating block may be formed to have a thickness from the receiving step.

The coupling block may be at least partly formed as a metal block, and a bottom surface of the insulating block may be formed as a non-flat surface.

The top surface of the insulating block opposite to the receiving step may be formed as a flat surface.

The insulating block may be provided to the receiving step at the coupling position, and the bottom surface of the end plate faces the top surface of the cooling plate.

The bottom surface of the insulating block and the top surface of the insulating block may be formed as flat surfaces.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a perspective view of a battery pack according to some embodiments of the present disclosure;
FIG. 2 is a perspective view of a portion of the battery pack shown in FIG. 1;
FIG. 3 is an exploded perspective view of a portion of the battery pack shown in FIG. 1;
FIG. 4 is a diagram showing the arrangement of insulating blocks IB formed at coupling positions CP where insulating blocks IB are coupled to an end plate E on a cooling plate 100 shown in FIG. 1;
FIG. 5 is a diagram showing insulating blocks IB formed at coupling positions CP between the end plate E and the cooling plate 100 shown in FIG. 1;
FIGS. 6A and 6B are diagrams of the present disclosure and a comparative example, respectively, showing results of measuring temperature variation according to positions within a battery cell;
FIG. 7 is a diagram showing results of measuring variations in reaction current depending on positions within battery cells of the present disclosure and the comparative example;
FIG. 8 is an exploded perspective view of a portion of a battery pack according to other embodiments of the present disclosure;
FIG. 9 is a diagram showing insulating blocks IB formed at coupling positions CP between an end plate E and a cooling plate 100 shown in FIG. 8;
FIG. 10 is an exploded perspective view of a portion of a battery pack according to other embodiments of the present disclosure;
FIG. 11 is a diagram showing insulating blocks IB formed at coupling positions CP between the end plate E and the cooling plate 100 shown in FIG. 10;
FIG. 12 is an exploded perspective view of a portion of a battery pack according to other embodiments of the present disclosure;
FIG. 13 is a diagram showing an insulating block IB formed at coupling positions CP between a cooling plate 100 and an end plate E, which are shown in FIG. 12, and at a position of a bottom surface Ea of the end plate E;
FIG. 14 is an exploded perspective view of a portion of a battery pack according to other embodiments of the present disclosure;
FIG. 15 is a diagram showing insulating blocks IB formed at coupling positions CP between a cooling plate 100 and an end plate E, which are shown in FIG. 14, and an insulating block IB formed at a position of a bottom surface Ea of the end plate E;
FIGS. 16A and 16B are diagrams of the present disclosure and the comparative example, respectively, showing results of measuring temperature variations according to positions within a battery cell; and
FIG. 17 is a diagram showing results of measuring variations of reaction current depending on positions within battery cells of the present disclosure and the comparative example.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to some embodiments of the present disclosure is described with reference to the drawings attached to the specification.

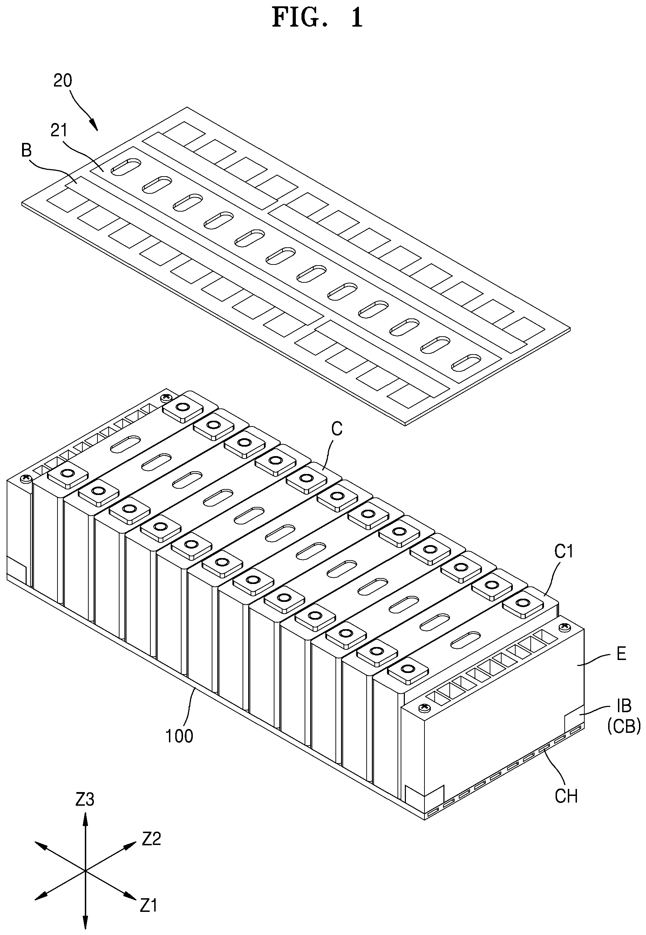

FIG. 1 is a perspective view of a battery pack according to some embodiments of the present disclosure.

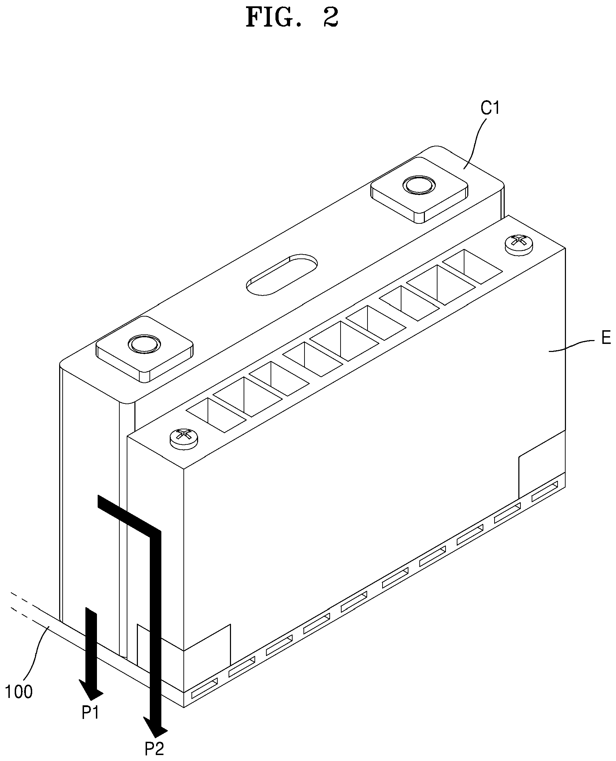

FIG. 2 is a perspective view of a portion of the battery pack shown in FIG. 1.

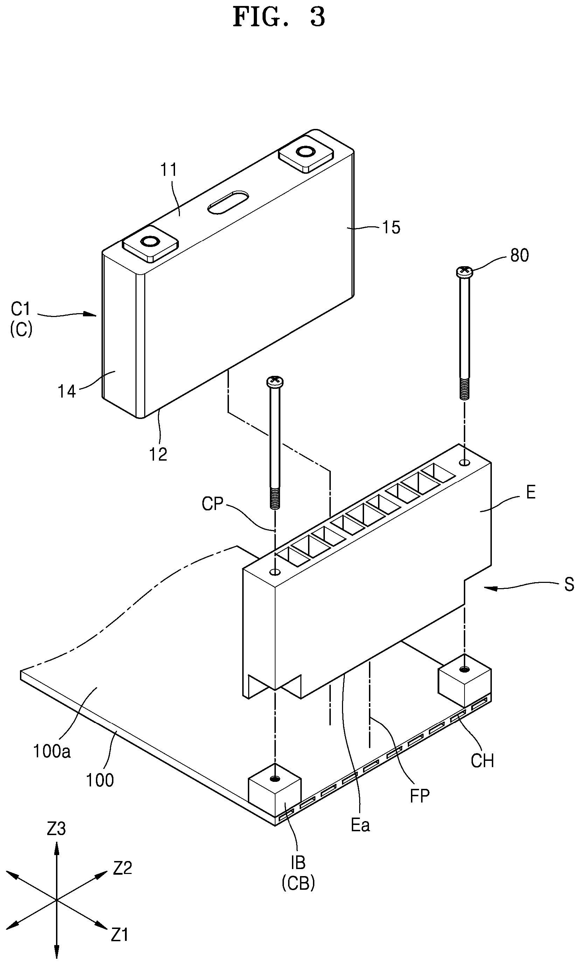

FIG. 3 is an exploded perspective view of a portion of the battery pack shown in FIG. 1.

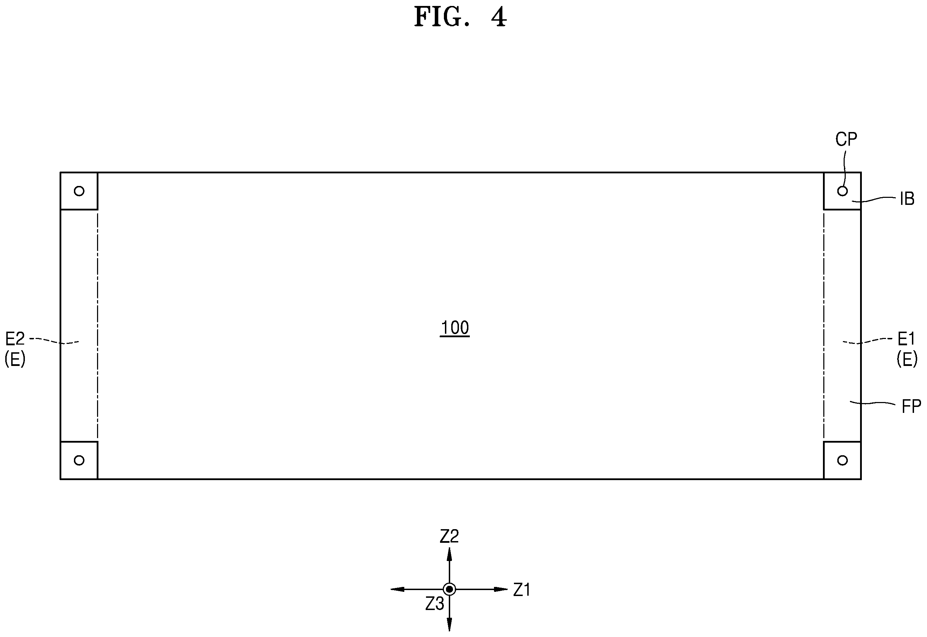

FIG. 4 is a diagram showing coupling positions CP and facing positions FP between a cooling plate 100 and end plates E.

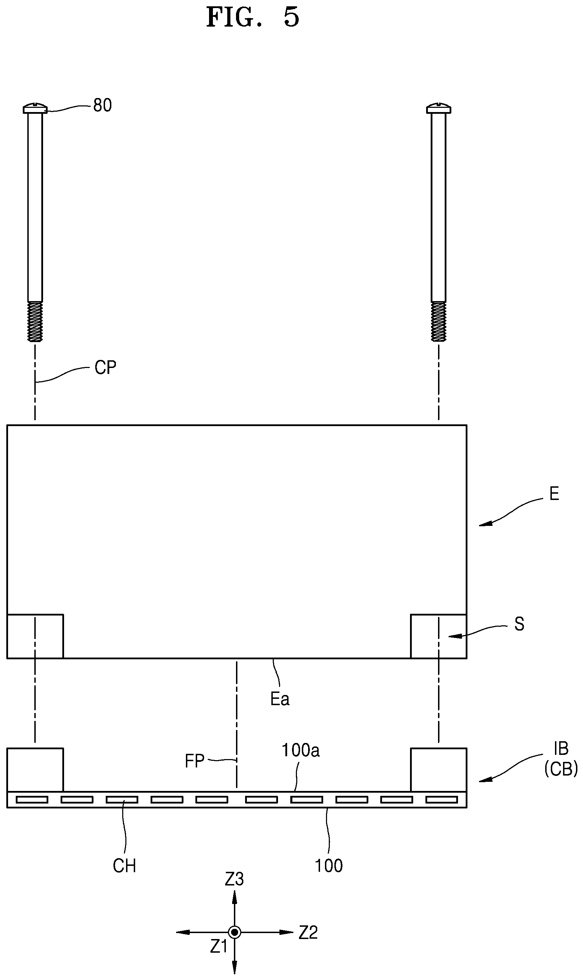

FIG. 5 is a diagram showing insulating blocks IB formed at coupling positions CP between the end plate E and the cooling plate 100 shown in FIG. 1.

Referring to the drawings, the battery pack according to some embodiments of the present disclosure may include a plurality of battery cells C arranged in a first direction Z1 and end plates E placed on the outside of the outermost battery cells C. According to some embodiments of the present disclosure, each of the battery cells C may include a terminal surface 11 where different first and second electrode terminals are formed, a bottom surface 12 opposite to the terminal surface 11, and a pair of wide sides and a pair of narrow sides which connect the terminal surface 11 to the bottom surface 12. According to some embodiments of the present disclosure, the pair of wide sides 15 may face each other in the first direction Z1 in which the battery cells C are arranged and the pair of narrow sides 14 may face each other in a second direction Z2 that intersects the first direction Z1. The second direction Z2 may refer to a direction in which the pair of narrow sides 14 of each battery cell C face each other or a direction in which the pair of first and second electrode terminals on the terminal surface 11 of the battery cell C face each other. The terminal surface 11 where the first and second electrode terminals are formed may face the bottom surface 12 in a third direction Z3 intersecting the first and second directions Z1 and Z2.

According to some embodiments of the present disclosure, the battery cells C may be electrically connected to each other through the upper terminal surfaces 11 where the first and second electrode terminals are formed and may be cooled through the bottom surfaces 12 opposite to the terminal surfaces 11. Because the electrical connection of the battery cells C and the cooling of the battery cells C are achieved through the upper terminal surfaces 11 and the lower bottom surfaces 12 that are opposite to each other, physical and electrical interference between the electrical connection between the battery cells C and the cooling of the battery cells C may be prevented. A bus bar B may be placed on the terminal surfaces 11 of the battery cells C for electrical connection between the plurality of battery cells C. For example, a plurality of bus bars B may be placed on the terminal surfaces 11 of the battery cells C to electrically connect the first and second electrode terminals of the neighboring battery cells C to each other. A cooling plate 100 may be placed under the bottom surfaces 12 of the battery cells C to cool the battery cells C. A bus bar holder 20 may be placed on the terminal surfaces 11 of the battery cells C. The bus bars B electrically connecting the different battery cells C and measurement wiring 21 measuring status information of the battery cells C, such as voltage, current, and temperature of the battery cells C, and transmitting the measured status information may be formed (e.g. provided) on the bus bar holder 20.

Referring to FIG. 3, the battery pack according to some embodiments of the present disclosure includes the cooling plate 100 arranged under the bottom surfaces 12 of the battery cells C and extending across the bottom surfaces 12 of a group of battery cells C forming the battery pack. As the cooling plate 100 extends across the bottom surfaces 12 of the group of battery cells C arranged in the first direction Z1 and bottom surfaces Ea of a pair of end plates E placed on both sides of the group of battery cells C, the cooling plate 100 may provide a support base for the group of battery cells C forming the battery pack and for the end plates E placed on both sides of the group of battery cells C. To cool the group of battery cells C forming the battery pack, the cooling plate 100 may extend across the bottom surfaces 12 of the plurality of battery cells C in the first direction Z1 as well as the bottom surfaces Ea of the end plates E placed at both sides of the plurality of battery cells C.

As the cooling plate 100 extends across the plurality of battery cells C and the end plates E placed at both sides of the plurality of battery cells C in the first direction Z1, a heat flow between the cooling plate 100 and the plurality of battery cells C (the bottom surfaces 12 of the battery cells C) may be formed and the cooling plate 100 may be physically coupled to the bottom surfaces Ea of the end plates E. The cooling plate 100 may be in contact with the plurality of battery cells C and the end plates E depending on the weight of the plurality of battery cells C and the end plates E. For example, the cooling plate 100 may form thermal contact with the plurality of battery cells C while extending across the bottom surfaces 12 of the plurality of battery cells C. The cooling plate 100 may be provided as a roughly rectangular plate with the first direction Z1 in which the plurality of battery cells C are arranged as a long side and the second direction Z2 as a short side, and the colling plate 100 may be formed with a sufficiently large area to entirely cover the battery pack in the first and second directions Z1 and Z2.

The cooling plate 100 may be formed in the shape of a plate in which cooling channels CH through which liquid or gaseous cooling fluid flows are formed. The plurality of cooling channels CH may extend in parallel in the first direction Z1 in the cooling plate 100.

The cooling plate 100 may cool the plurality of battery cells C arranged in the first direction Z1 while extending across the bottom surfaces 12 of the plurality of battery cells C arranged in the first direction Z1. In particular, the cooling plate 100 may cool the battery cells C and provide a support base for the plurality of battery cells C. The cooling plate 100 may provide a support base for the plurality of battery cells C and the end plates E while extending across the bottom surfaces 12 of the plurality of battery cells C arranged in the first direction Z1 and the bottom surfaces Ea of the end plates E placed at both sides of the plurality of battery cells C in the first direction Z1.

As the end plates E structurally bind an array of battery cells C into a single pack, the end plates E may physically and electrically protect and insulate the array of battery cells C from the external environment. The battery cells C may be subject to volume expansion (swelling) during charging and discharging. The volume expansion of the battery cells C may change the resistance characteristics of the battery cells C and deteriorate the output characteristics of the battery cells C. By arranging the pair of end plates E at both sides of the array of battery cells C, swelling of the battery cells C may be suppressed. The swelling of the array of battery cells C between the pair of end plates E may be suppressed by binding the pair of end plates E toward each other through side plates that extend across the sides of the battery cells C and bind the pair of end plates E.

The end plates E binding the group of battery cells C forming the battery pack into one pack may suppress the swelling of the battery cells C through the binding force that binds the group of battery cells C. The end plates E may include a metal material. The end plates E including the metal material may have appropriate rigidity and toughness to protect the group of battery cells C from the external environment.

The cooling plate 100 may be in contact with the end plates E while extending across the bottom surfaces Ea of the end plates E and may be physically coupled to the end plates E. The cooling plate 100 and the end plates E may be physically coupled to each other. Coupling blocks CB and receiving steps S formed in complementary shapes for physical coupling may be formed on the cooling plate 100 and in the end plates E, respectively. The coupling blocks CB and the receiving steps S may fit each other in complementary shapes. The receiving steps S of the end plate E may be seated on the coupling blocks CB formed on the cooling plate 100. The receiving steps S of the end plate E may fit the coupling blocks CB on the cooling plate 100 to temporarily fix the end plate E to the cooling plate 100. Coupling members 80 (screws) may be used to firmly couple the end plate E and the cooling plate 100.

The coupling blocks CB may be formed on both sides of the cooling plate 100 in the second direction Z2. Further, the coupling blocks CB may be formed at corners of the cooling plate 100 in the first and second directions Z1 and Z2. For coupling the end plates E1 and E2 arranged in front and rear positions of the cooling plate 100, respectively, in the first direction Z1, four coupling blocks CB may be placed on the sides at the front position and the rear position of the cooling plate 100. That is, the coupling blocks CB may be formed at the four corners of the cooling plate 100.

The receiving steps S may be formed at both sides of the end plate E in the second direction Z2 to be seated on the coupling blocks CB of the cooling plate 100. More specifically, the receiving steps S formed at both sides of the end plate E in the second direction Z2 may extend across a pair of narrow sides that face each other in the second direction Z2 and a pair of wide sides (a pair of wide sides facing each other in the first direction Z1) meeting the pair of narrow sides. The receiving steps S may be in the form of grooves recessed toward the inside of the end plate E in a third direction Z3 intersecting the first and second directions Z1 and Z2 at corners of the end plate E. The receiving steps S of the end plate E may be mainly formed at corners where the narrow sides of the end plate E meet the wide sides of the end plate E facing outwards and meeting the narrow sides. As the receiving steps S are recessed from the corners, the corners may provide the coupling positions CP between the receiving steps S of the end plate E and the coupling blocks CB of the cooling plate 100.

The receiving steps S formed at the corners of the end plates E may be seated on the coupling blocks CB. As the coupling members 80 penetrating the end plates E having the receiving steps S mounted on the coupling blocks CB of the cooling plate 100 are coupled to the coupling blocks CB through the receiving steps S, the cooling plate 100 may be coupled to the end plates E.

The battery pack includes insulating blocks IB placed between the cooling plate 100 and the end plates E. The cooling plate 100 and the end plates E may be thermally insulated from each other by the insulating blocks IB positioned therebetween. The insulating blocks IB may block a heat flow (second path P2, see FIG. 2) extending from the end plates E to the cooling plate 100 and may block the heat flow of the outermost battery cells C1, which are close to the end plates E, from flowing differently from the heat flow of other battery cells C. The end plates E may be placed at both sides of the array of the battery cells C in the first direction Z1. The end plate E may form the heat flow (second path P2, see FIG. 2) with the outermost battery cell C1 at a position adjacent to the outermost battery cell C1 on the outside of the outermost battery cell C1 in the first direction Z1.

The insulating blocks IB may be placed between the cooling plate 100 and the end plates E to prevent different heat flow paths (e.g., second path P2, see FIG. 2) from being formed between the outermost battery cells C1 arranged at outermost positions of the array of battery cells C in the first direction Z1 and the inner battery cells C arranged at an inner position of the array of battery cells C in the first direction Z1. The heat flow path extending from the end plates E to the cooling plate 100 may be blocked by the insulating blocks IB positioned between the cooling plate 100 and the end plates E. Different heat flow paths may be blocked from being formed depending on the position of the battery cells C in the first direction Z1. Regardless of the position of the battery cells C in the first direction Z1, the main heat flow from the battery cells C toward the cooling plate 100 may be formed along a first path P1 from the bottom surfaces 12 of the battery cells C toward the cooling plate 100 and may not be formed along the second path P2 from the sides of the battery cells C (outermost battery cells C1) to the cooling plate 100 through the end plates E.

Referring to FIG. 2, according to some embodiments of the present disclosure, the insulating block IB may be positioned between the end plate E and the cooling plate 100 where the second path P2 is formed. The insulating block IB blocks the heat flow along the second path P2, thereby making the main heat flow be along the first path P1 from the bottom surface 12 of the battery cell C in the array of the plurality of battery cells C arranged in the first direction Z1 to the cooling plate 100. By blocking the heat flow between the end plate E and the cooling plate 100, the insulating blocks IB may block the second path P2 from the side of the outermost battery cell C1 to the cooling plate 100 through the end plate E. Thermal imbalance where the heat flow is formed along the different first and second paths P1 and P2 in the outermost battery cell C1 is prevented while the heat flow is formed along only (or at least mainly) the first path P1 in the inner battery cells C, thereby eliminating the temperature variation depending on the position of the battery cells C.

Referring to FIG. 3, the insulating blocks IB may be positioned between the end plate E and the cooling plate 100. The insulating blocks IB may be formed around the coupling positions CP that are in close contact between at least the end plate E and the cooling plate 100.

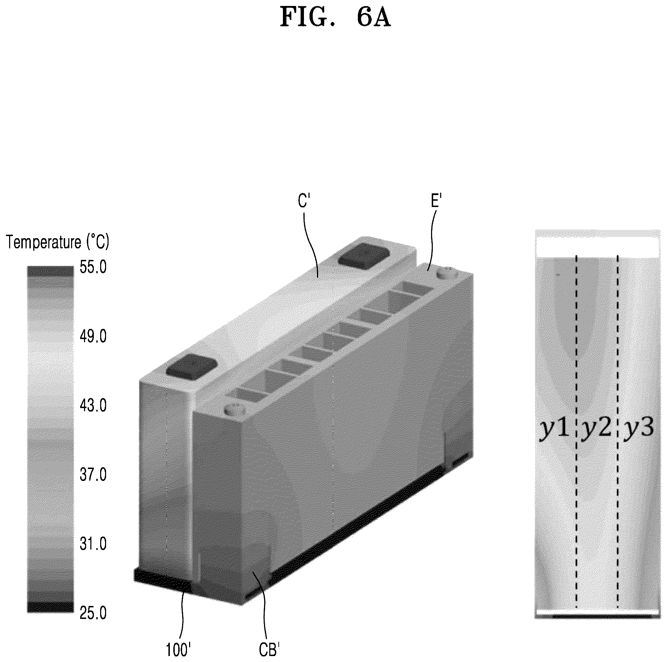

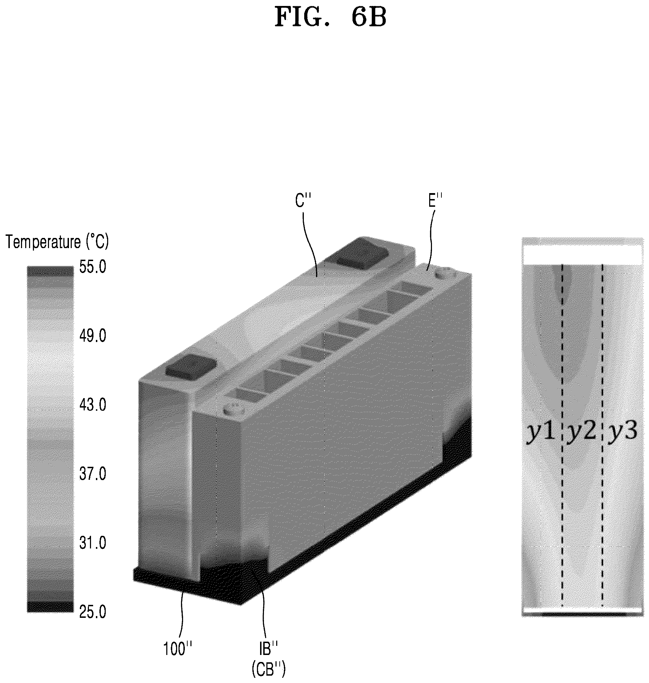

FIGS. 6A and 6B are diagrams of the present disclosure and a comparative example, respectively, showing results of measuring temperature variation according to positions within a battery cell.

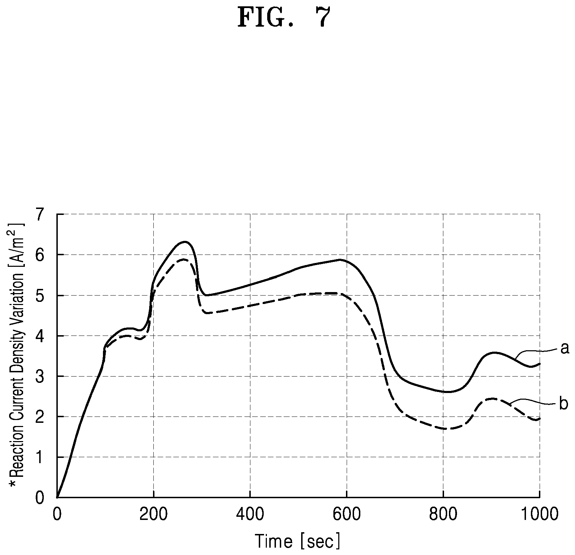

FIG. 7 is a diagram showing results of measuring variations in reaction current depending on positions within battery cells of the present disclosure and the comparative example.

In the comparative example shown in FIG. 6A, coupling blocks CB' are formed as metal blocks between a cooling plate 100' and an end plate E'. As shown in the figure, it was confirmed that the temperature variation of a battery cell C' (outermost battery cell) increased as the battery cell C' was cooled through a first path from the battery cell C' (outermost battery cell) to the cooling plate 100' and a second path toward the cooling plate 100' through the end plate E'. Among three thickness portions of the battery cell C' (outermost battery cell) in the first direction Z1 in which the plurality of battery cells C' are arranged, e.g., among a first thickness portion y1 facing the neighboring battery cell C', a central second thickness portion y2, and a third thickness portion y3 adjacent to the end plate E', a high temperature variation of about 6.0 °C was measured between the central second thickness portion y2 and the third thickness portion y3 adjacent to the end plate E'.

In some embodiments of the present disclosure of FIG. 6B, unlike the comparative example of FIG. 6A, the coupling blocks CB" are formed of insulating blocks IB" between the cooling plate 100" and the end plate E". As shown in the figure, it was confirmed that the temperature variation of a battery cell C" (outermost battery cell) was reduced by allowing the heat flow along the first path from the battery cell C" (outermost battery cell) to the cooling plate 100" while suppressing the heat flow along the second path from the battery cell C" to the cooling plate 100" through the end plate E". Among the three thickness portions of the battery cell C" (outermost battery cell) in the first direction Z1 in which the plurality of battery cells C" are arranged, e.g., among a first thickness portion y1 facing the neighboring battery cell C", a central second thickness portion y2, and a third thickness portion y3 adjacent to the end plate E", a temperature variation of about 5 °C, which was reduced by about 17%, was measured between the central second thickness portion y2 and the third thickness portion y3 adjacent to the end plate E".

In the comparative example of FIG. 6A, a high temperature variation of about 6.6 °C was measured between the central battery cell C' and the outermost battery cell C' in the first direction in which the plurality of battery cells C' are arranged, among the plurality of battery cells C' forming the battery pack. However, in embodiments of the present disclosure shown in FIG. 6B, a temperature variation of about 5.0 °C, which was reduced by about 25%, was measured between the central battery cell C" and the outermost battery cell C".

In FIG. 7, profile a shows the variation in reaction current density (A/m²) according to the positions within the battery cell C' shown in the comparative example of FIG. 6A, wherein the reaction current density (A/m²) may be understood as the magnitude of current generated inside battery cells. Referring to the profile a of FIG. 7, among the three thickness portions of the battery cell C' (outermost battery cell) in the first direction Z1 in which the plurality of battery cells C' are arranged, e.g., among a first thickness portion y1 facing the neighboring battery cell C', a central second thickness portion y2, and a third thickness portion y3 adjacent to the end plate E', a high variation in reaction current density of about 3.3 A/m² was measured between the central second thickness portion y2 and the third thickness portion y3 adjacent to the end plate E'.

In FIG. 7, profile b shows a variation in reaction current density (A/m²) according to the positions within the battery cell C" shown in FIG. 6B. Referring to profile b of FIG. 7, among the three thickness portions of the battery cell C" (outermost battery cell) in the first direction Z1 in which the plurality of battery cells C" are arranged, e.g., among a first thickness portion y1 facing the neighboring battery cell C", a central second thickness portion y2, and a third thickness portion y3 adjacent to the end plate E", a variation in reaction current density of about 2.0 A/m², which was reduced by about 41%, was measured between the central second thickness portion y2 and the third thickness portion y3 adjacent to the end plate E".

From the experimental results in FIG. 7, it may be confirmed that the temperatures of the battery cells C' and C" directly affect the electrical output characteristics of the battery cells C' and C". In particular, it may be confirmed that the increased temperature variation depending on the positions in the battery cell C'as shown in the comparative example of FIG. 6A increased the variation in electrical output characteristics (variation in reaction current density) depending on the positions in the battery cell C' as shown in profile a of FIG. 7. Further, it may be confirmed that the reduced temperature variation depending on the positions in the battery cell C" as shown in FIG. 6B reduces the variation in electrical output characteristics (variation in reaction current density) depending on the positions in the battery cell C" as shown in profile b of FIG. 7.

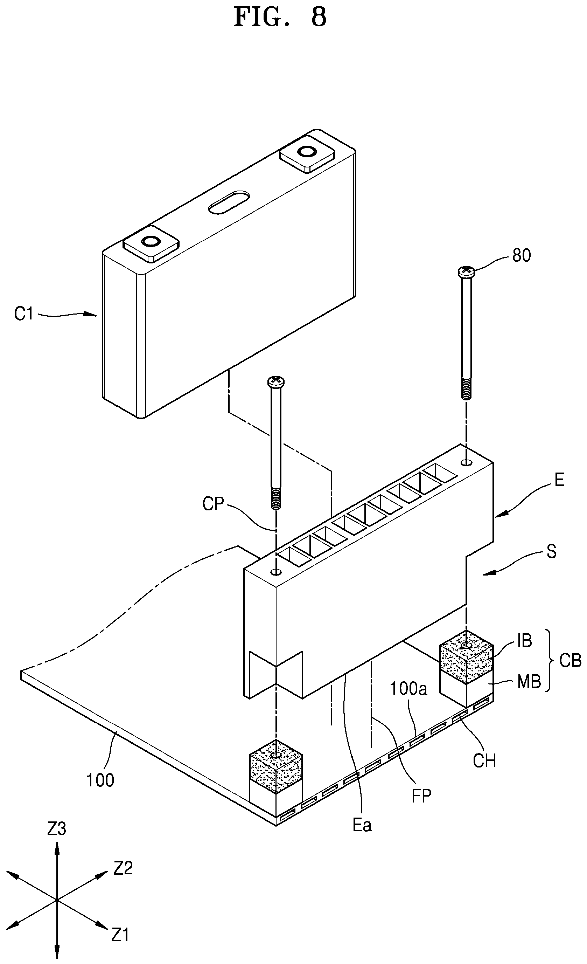

FIG. 8 is an exploded perspective view of a portion of a battery pack according to other embodiments of the present disclosure.

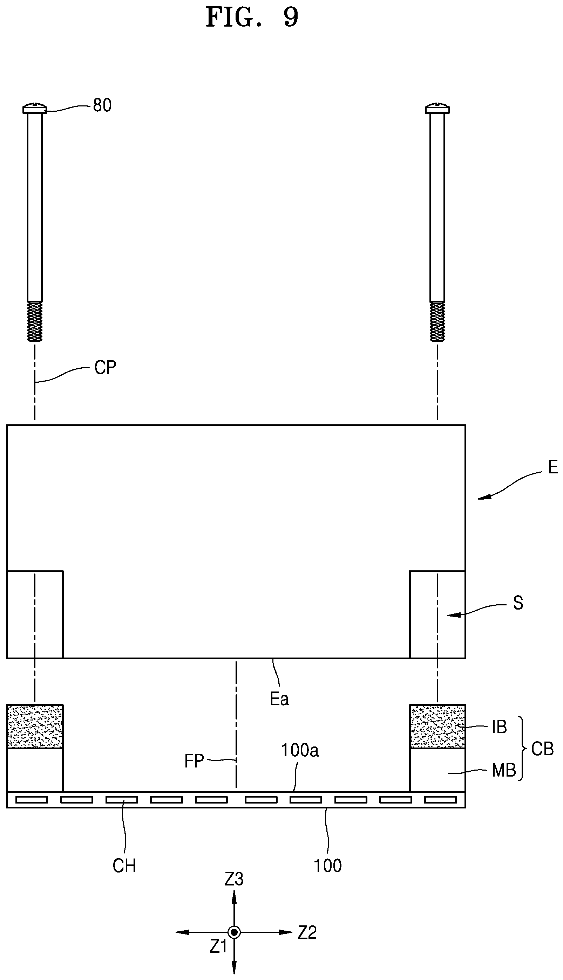

FIG. 9 is a diagram showing insulating blocks IB formed at coupling positions CP between an end plate E and a cooling plate 100 shown in FIG. 8.

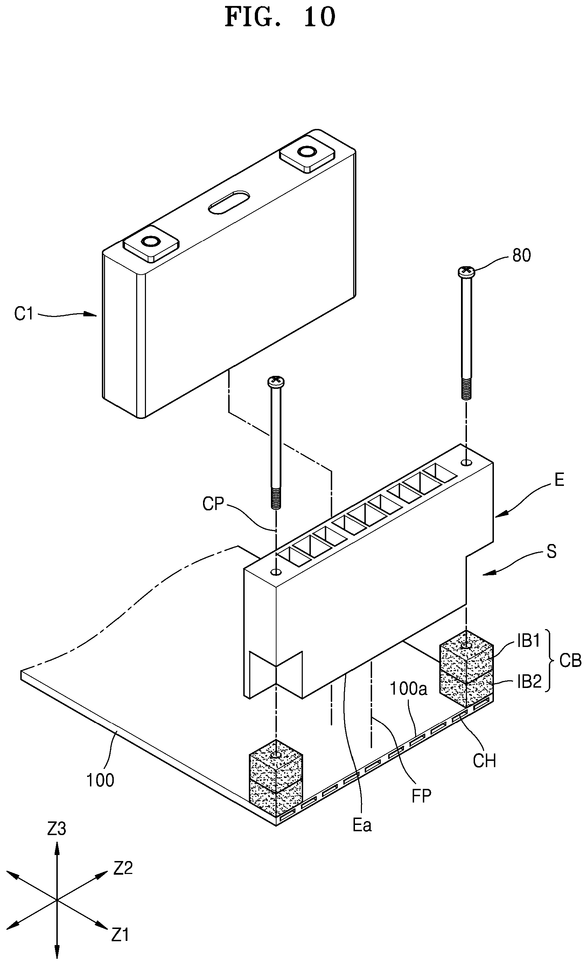

FIG. 10 is an exploded perspective view of a portion of a battery pack according to other embodiments of the present disclosure.

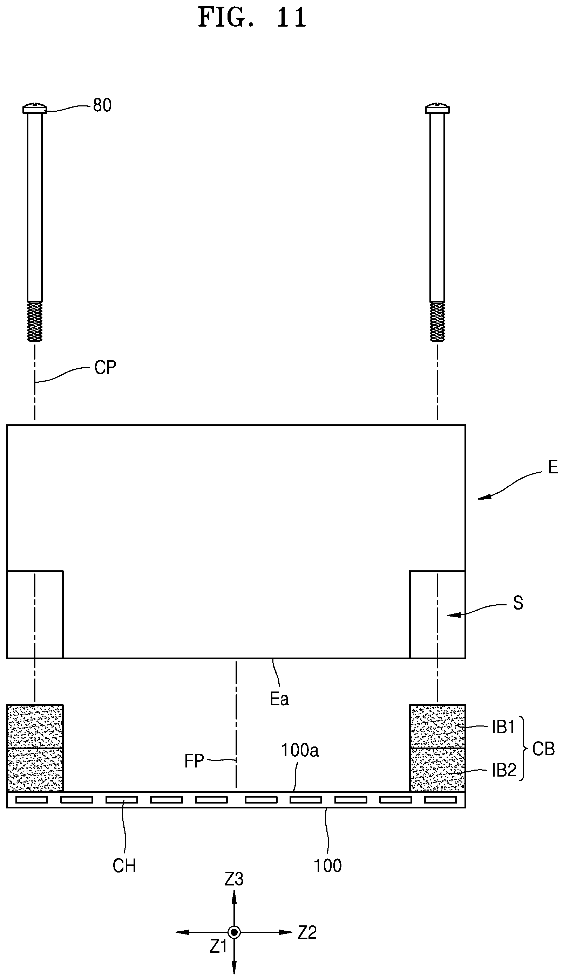

FIG. 11 is a diagram showing insulating blocks IB formed at coupling positions CP between the end plate E and the cooling plate 100 shown in FIG. 10.

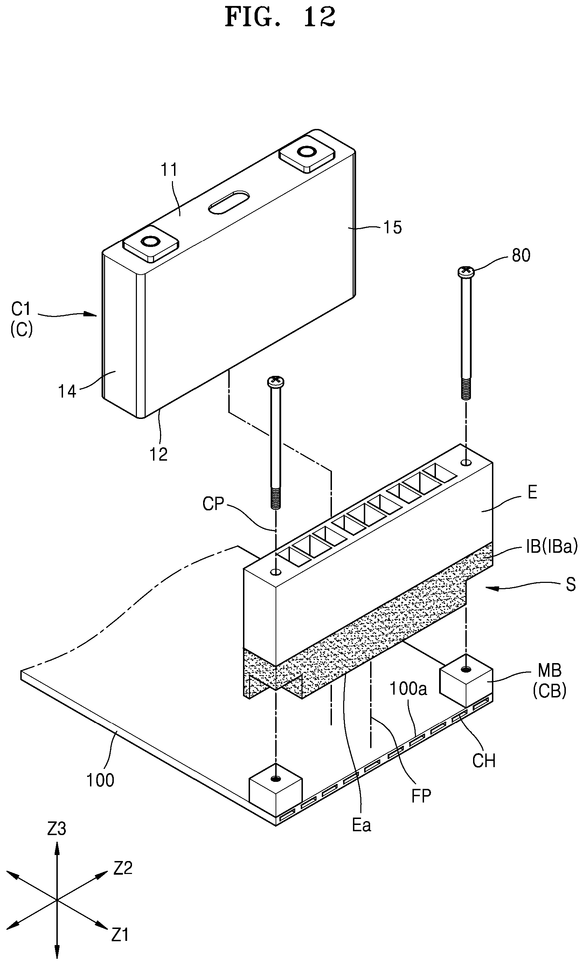

FIG. 12 is an exploded perspective view of a portion of a battery pack according to other embodiments of the present disclosure.

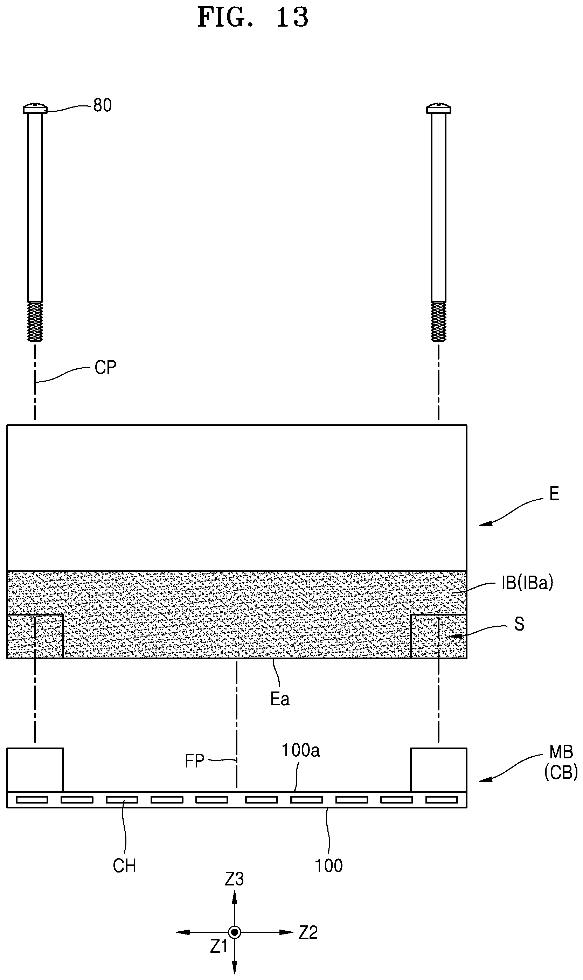

FIG. 13 is a diagram showing an insulating block IB formed at coupling positions CP between a cooling plate 100 and an end plate E, which are shown in FIG. 12, and at a position of a bottom surface Ea of the end plate E.

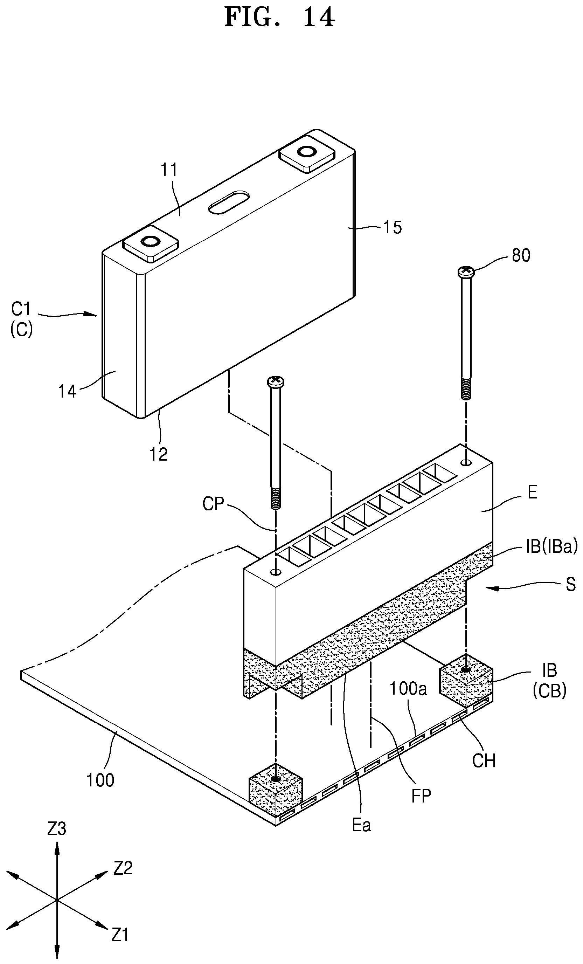

FIG. 14 is an exploded perspective view of a portion of a battery pack according to other embodiments of the present disclosure.

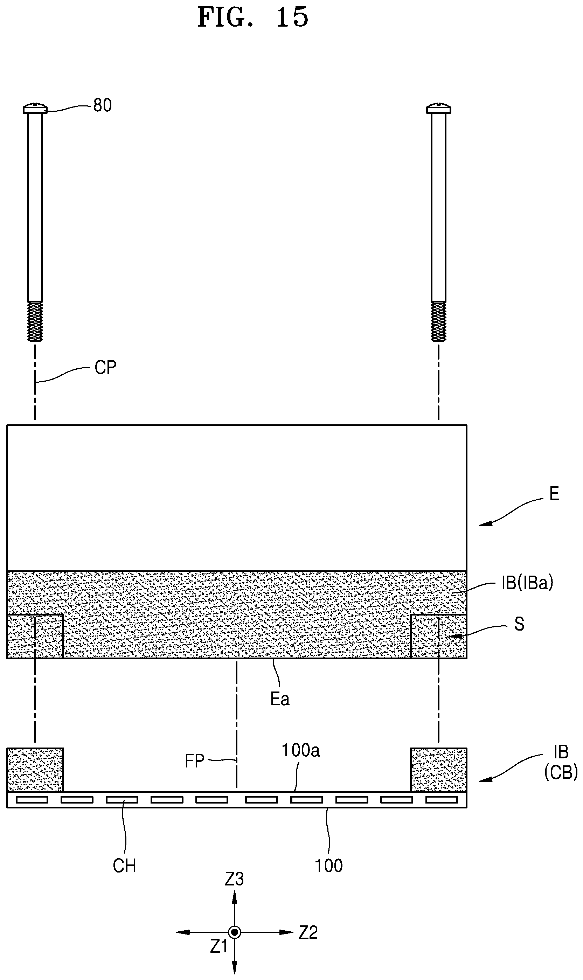

FIG. 15 is a diagram showing insulating blocks IB formed at coupling positions CP between a cooling plate 100 and an end plate E, which are shown in FIG. 14, and an insulating block IB formed at a position of a bottom surface Ea of the end plate E.

According to some embodiments as shown in FIG. 8, the insulating blocks IB may be formed on the metal blocks MB of the cooling plate 100. The insulating blocks IB may be arranged on the metal blocks MB corresponding to the coupling positions CP of the cooling plate 100 and the end plate E, which can be brought into close contact with each other depending on the coupling pressure, from coupling members 80, between the end plate E and the cooling plate 100. A combination of the metal block MB and the insulating block IB stacked on top of each other in the third direction Z3 may function as a single coupling block CB. The combination of the metal block MB and the insulating block IB stacked on top of each other functioning as the single coupling block CB may fit the receiving step S of the end plate E.

The coupling positions CP of the end plate E and the cooling plate 100 may refer to positions where the receiving steps S of the end plate E and the coupling blocks CB of the cooling plate 100 face each other. That is, the coupling positions CP of the end plate E and the cooling plate 100 may include positions where the receiving steps S of the end plate E and the coupling blocks CB of the cooling plate 100 which face each other are formed and positions between the receiving steps S of the end plate E and the coupling blocks CB of the cooling plate 100. For example, the coupling position CP between the end plate E and the cooling plate 100 may include a central area where the end plate E is coupled to the cooling plate 100 and where the coupling line is projected along the coupling line where the coupling member 80 is inserted, and an area surrounding the central area.

In FIGS. 3 to 5 and 8 to 11, the drawings show the arrangement of insulating blocks IB according to embodiments of the present disclosure are shown.

The insulating blocks IB may be formed as the coupling blocks CB on the cooling plate 100. For example, the insulating blocks IB are implemented as the coupling blocks CB may mean that the insulating blocks IB can receive the coupling members 80 that are exposed through the receiving steps S and can be combined with the coupling members 80 while fitting to the receiving steps S of the end plate E to function as the coupling blocks CB.

That the insulating block IB blocks the heat flow between the end plate E and the cooling plate 100 to block the heat flow along second path P2 (see FIG. 2) from the wide side 15 of the outermost battery cell C1 to the cooling plate 100 through the end plate E, may mean that the insulating block IB has the high thermal resistance or low heat conductivity characteristics to suppress the heat flow between the end plate E and the cooling plate 100. More specifically, the insulating block IB is formed from insulating materials with high thermal resistance or low thermal conductivity characteristics, thereby minimizing or suppressing heat transfer despite relatively high temperature differences.

As shown in FIG. 5, the insulating block IB may include a single insulating block IB. In other words, the coupling block CB may be formed of the single insulating block IB. As shown in FIG. 11, the insulating block IB may include two or more insulating blocks IB1 and IB2 stacked on top of each other. The coupling block CB may be formed of the two or more insulating blocks IB1 and IB2 stacked on top of each other. To effectively block the heat flow between the end plate E and the cooling plate 100, the height of the insulating block IB may be increased by the increasing of the number of insulating blocks stacked on top of each other.

The insulating block IB may form all (i.e., an entirety of) or a part of the coupling block CB. The coupling block CB which fits the receiving step S of the end plate E in a complementary shape may be formed of a single insulating block IB, two or more insulating blocks IB1 and IB2 stacked on top of each other, or a combination of the insulating block IB and a metal block MB. That is, the insulating block IB forming all (i.e., an entirety of) or a part of the coupling block CB may include a single insulating block IB as shown in FIG. 5, or two or more different insulating blocks IB1 and IB2 as shown in FIG. 11, or may be formed in a combination of the insulating block IB and the metal block MB as shown in FIG. 9.

Referring again to FIG. 1, the end plates E may increase the binding strength of the coupling blocks CB into which the coupling members 80 for coupling the end plates E to the cooling plate 100 are inserted, thereby providing sufficient binding force to the battery cells C between the end plates E. It may be preferable to form the coupling blocks CB that are the metal blocks MB of light metal rather than insulating blocks IB of relatively soft insulating material because the metal blocks MB can increase the binding strength for the plurality of battery cells C. However, according to some embodiments of the present disclosure, it may also preferable to form the coupling blocks CB as the insulating blocks IB with relatively low heat conductivity characteristics, thereby blocking the heat flow along the second path P2 from the wide side 15 of the outermost battery cell C1 to the cooling plate 100 through the end plate E and suppressing the temperature variation of the battery pack including the battery cell C or the plurality of battery cells C through the first path P1 from the bottom surfaces 12 of the plurality of battery cells C. By providing the metal blocks MB of relatively light metal as the coupling blocks CB in the coupling positions CP, sufficient binding strength may be provided for the plurality of battery cells C sandwiched between the end plates E on both sides. By providing the insulating blocks IB that are relatively soft but have low heat conductivity characteristics as the coupling blocks in the coupling positions CP, the heat flow along the second path P2 from the wide side 15 of the outermost battery cell C1 through the end plate E toward the cooling plate 100 may be blocked and the common heat flow along the first path P1 for the plurality of battery cells C arranged in the first direction Z1 may be provided, thereby efficiently removing the temperature variation for the plurality of battery cells C.

Thus, the binding strength for the plurality of battery cells C may be increased by providing the metal blocks MB that have high heat conductivity characteristics but provide relatively high binding strength as the coupling blocks CB forming the coupling positions CP between the end plates E and the cooling plate 100 and the temperature variation for the plurality of battery cells C may be reduced by providing the insulating blocks IB that provide relatively low binding strength but have low heat conductivity characteristics as the coupling blocks CB. According to some embodiments of the present disclosure, it may be possible to have a compromise between securing the binding strength and reducing the temperature variation by providing the metal block MB that is advantageous in terms of securing the binding strength as a part of the coupling block CB and providing the insulating block IB that is advantageous in terms of reducing the temperature variation as the other part of the coupling block CB. Such an embodiment is exemplified in FIG. 9.

The insulating blocks IB may be formed from an insulating material with high thermal resistance or low thermal conductivity characteristics, thereby minimizing or suppressing heat transfer despite relatively high temperature differences. The insulating blocks IB may be formed with a sufficient thickness to satisfy the thermal resistance and heat conductivity characteristics required for sufficient insulation between the end plates E and the cooling plate 100.

The insulating block IB may be formed as an entirety, (e.g., all of) of the coupling block CB formed on the cooling plate 100 or may be implemented as an entirety (e.g. all of) of the coupling block CB, as shown in FIGS. 5 and 11. As shown in FIG. 9, the insulating block IB may be formed as a part of the coupling block CB formed on the cooling plate 100 or may be implemented as a part of the coupling block CB. More specifically, referring to FIG. 9, the insulating block IB may be stacked cumulatively on the metal block MB. The combination of the metal block MB and the insulating block IB may function as a single coupling block CB. For example, the combination of the metal block MB and the insulating block IB stacked on top of each other may function as a single coupling block CB and may fit the receiving step S of the end plate E. As such, the metal block MB and the insulating block IB may have a combined height to fit the receiving step S formed on the end plate E with complementary shape. The metal block MB and the insulating block IB may each receive the coupling member 80. However, the insulating block IB, unlike the metal block MB, may be positioned between the end plate E and the cooling plate 100 to block the heat flow along the second path P2 from the wide side 15 of the outermost battery cell C1 to the cooling plate 100 through the end plate E and may be formed of insulating material. The insulating material may have high thermal resistance or low thermal conductivity characteristics. The metal block MB, unlike the insulating block IB, may be formed of metal material, for example, with the same and similar type of metal material that forms the cooling plate 100.

The coupling positions CP where the insulating blocks IB are formed are positions outside the plurality of battery cells C in the first direction Z1 in which the plurality of battery cells C are arranged. The coupling positions CP may be formed to bind the end plate E to the cooling plate 100 outside the plurality of battery cells C in the first direction Z1 and the insulating blocks IB may be arranged at the coupling positions CP.

Referring to FIG. 4, the cooling plate 100 may extend in the first direction Z1 in which the plurality of battery cells C are arranged. The front and rear end plates E1 and E2 disposed on both sides of the array of battery cells C may be disposed on both ends of the cooling plate 100 in the first direction Z1. As such, the end plates E may be placed at both ends of the cooling plate 100 in the first direction Z1 and the coupling positions CP may be formed by overlapping the cooling plate 100 with the end plates E. The coupling positions CP at which the cooling plate 100 is coupled to the end plates E may include both ends of the cooling plate 100 in the first direction Z1 outside the battery cells C. As the end plates E are arranged to overlap with both ends of the cooling plate 100, the coupling positions CP of the cooling plate 100 and the end plates E are formed.

As the end plates E are arranged to overlap with both ends of the cooling plate 100 in the first direction Z1 in which the plurality of battery cells C are arranged, the coupling positions CP may be formed where the top surface of the cooling plate 100 overlap with the bottom surfaces Ea of the end plates E. The end plates E may be arranged on both ends of the cooling plate 100 in the first direction Z1 in which the plurality of battery cells C are arranged. Although the end plates E overlap with both ends of the cooling plate 100, the coupling positions CP at which the cooling plate 100 is coupled to the end plates E may not be formed across both ends of the cooling plate 100. Both sides of the cooling plate 100 where coupling members 80 are inserted between both ends of the cooling plate 100 and the end plates E arranged to overlap each other may correspond to the coupling positions CP between the cooling plate 100 and the end plates E. The coupling positions CP at which the cooling plate 100 is coupled to the end plates E may correspond to both ends in the first direction Z1 in which the plurality of battery cells C are arranged and both sides of the cooling plate 100 in the second direction Z2 that intersects the first direction Z1. The coupling positions CP at which the cooling plate 100 is coupled to the end plates E may include coupling positions CP where the coupling members 80 are inserted to couple the cooling plate 100 to the end plates E and the coupling members 80 may correspond to both sides of the cooling plate 100 in the second direction Z2 among both ends of the cooling plate 100 on which the end plates E are arranged in the first direction Z1. The coupling positions CP for coupling the cooling plate 100 to the end plates E may correspond to corners of the cooling plate 100 extending in the first and second directions Z1 and Z2, e.g., generally four corners of the cooling plate 100 (see FIG. 4). The front end plate E1 and the rear end plate E2 may be placed to overlap with the front position and the rear position of the cooling plate 100, i.e., both ends of the cooling plate 100 in the first direction Z1, respectively. A pair of front coupling positions CP may be formed on both front sides of the cooling plate 100 in the second direction Z2. Similarly, a pair of rear coupling positions CP may be formed on both rear sides of the cooling plate 100 in the second direction Z2.

The insulating block IB for blocking the heat flow along the second path P2 from the end plate E to the cooling plate 100 is placed between the end plate E and the cooling plate 100. More specifically, the insulating blocks IB may be formed at the coupling positions CP in which close contact is formed through binding mechanisms, such as coupling members 80. The insulating blocks IB may be formed at the coupling positions CP where the coupling members 80 are inserted. More specifically, the coupling positions CP where the insulating blocks IB are formed may refer to corners of the cooling plate 100 in the first and second directions Z1 and Z2 where the end plates E overlap with the cooling plate 100. Referring to FIGS. 12-15, the insulating blocks IB (IBa) may be formed at the facing positions FP where the end plates E face the cooling plate 100, in addition to the coupling positions CP between the end plates E and the cooling plate 100. Referring to FIG. 4, the facing positions FP where the end plates E face the cooling plate 100 may be formed between the coupling positions CP formed at the corners of the cooling plate 100 where the end plates E are arranged to overlap and the coupling members 80 are inserted. More specifically, the facing position FP may include a central position between the coupling positions CP on both sides of the cooling plate 100 in the first direction Z1 of both ends of the cooling plate 100 in the second direction Z2.

According to embodiments shown in FIGS. 12 to 15, the insulating blocks IB (IBa) may be formed at the coupling positions CP including the coupling line where coupling members 80 that couple the end plates E to the cooling plate 100 are inserted and the periphery of the coupling line. The insulating blocks IB (IBa) may be provided at the facing positions FP of the end plates E and the cooling plate 100 where there is loose contact in addition to the coupling positions CP of the end plates E and the cooling plate 100 where close contact is formed. For example, both sides of the cooling plate 100 in the second direction Z2 at both ends of the cooling plate 100 facing the end plate E may be the coupling positions CP where the end plates E are coupled to the cooling plate 100. The central part of the cooling plate 100 in the second direction Z2 of both ends of the cooling plate 100 may correspond to the facing positions FP where the end plates E face the cooling plate 100. The insulating blocks IB (IBa) may be formed on the bottom surfaces Ea of the end plates E facing the top surface 100a of the cooling plate 100 and may be formed to have a certain thickness in the depth direction from the bottom surfaces Ea of the end plates E. In the drawings, e.g. FIGS. 12 to 15, drawing symbol IBa may refer to the insulating blocks IB formed at the facing positions FP where the end plates E face the cooling plate 100.

The coupling positions CP where the bottom surfaces Ea of the end plates E are coupled to the top surface 100a of the cooling plate 100 and the facing positions FP where the bottom surfaces Ea of the end plate E face the top surface 100a of the cooling plate 100 may be formed at both ends of the cooling plate 100 in the first direction Z1. Both sides of the cooling plate 100 in the second direction Z2 at both ends of the cooling plate 100 in the first direction Z1 may correspond to the coupling positions CP and the central positions in the second direction Z2 thereof may correspond to the facing positions FP.

The insulating blocks IB (IBa) may be formed at least at the coupling positions CP and may be additionally formed at the facing positions FP. That is, the insulating blocks IB (IBa) may be formed only at the coupling positions CP of the end plates E and the cooling plate 100 or, see FIGS. 12 to 15, both at the coupling positions CP and at the facing positions FP where the bottom surfaces Ea of the end plates E face the top surface 100a of the cooling plate 100. The heat flow along the second path P2 from the end plates E to the cooling plate 100 may be actively formed at the coupling positions CP where the end plates E are tightly coupled to the cooling plate 100 through the coupling members 80. But the insulating blocks IB may be formed at least at the coupling positions CP between the end plates E and the cooling plate 100 to thereby suppress the heat flow along the second path P2. In addition to the coupling positions CP at which there is close contact through the coupling members 80, the insulating blocks IB (IBa) may also be formed at the facing positions FP where the end plates E face the cooling plate 100 that do not form as close contact as at the coupling positions CP but may cause the heat flow along the second path P2 through the loose contact. But the insulating blocks IB (IBa) may be formed both at the coupling positions CP and at the facing positions FP.

To block the heat flow along the second path P2 from the end plates E to the cooling plate 100, the insulating blocks IB may be formed at the coupling positions CP at which there is relatively close contact between the end plates E and the cooling plate 100. Although the insulating blocks IB (IBa) can be formed in the facing positions FP in addition to the coupling positions CP, it may be difficult to effectively block the heat flow along the second path P2 when the insulating blocks IB are arranged only in the facing positions FP that form relatively loose contact, without considering the coupling positions CP where there is relatively close contact. For example, embodiments in which the insulating blocks IB are formed only at the facing positions FP and not formed at the coupling positions CP may not be preferred because arranging the insulating blocks IB only at the facing positions FP which cause the relatively small heat flow without arranging the insulating blocks IB at the coupling positions CP which cause the relatively large heat flow may be less effective to suppress the heat flow along the second path P2.

The coupling positions CP where the end plates E are coupled to the cooling plate 100 may be formed in different structures from the facing positions FP where the end plates E face the cooling plate 100. At the coupling positions CP, a separate coupling structure for penetration or coupling of the coupling members 80 inserted into the end plates E and the cooling plate 100, may be used. However, at the facing positions FP, a separate coupling structure may not be required for the end plates E and the cooling plate 100.

According to embodiments shown in FIGS. 5, 9, and 11, the coupling blocks CB to which the coupling members 80 are coupled may be formed at the coupling positions CP of the cooling plate 100. The coupling blocks CB may be formed in a complementary shape to the coupling members 80 for matching with the coupling members 80. For example, helical grooves complementary to the threaded coupling members 80 may be formed in the coupling blocks CB. The coupling blocks CB may protrude to a certain height from the cooling plate 100 to provide sufficient binding force with the coupling members 80. The receiving steps S capable of receiving the coupling blocks CB of the cooling plate 100 may be formed on the end plates E facing the coupling blocks CB of the cooling plate 100. The coupling blocks CB formed at the coupling positions CP of the cooling plate 100 may fit in complementary shapes and correspond to the receiving steps S formed in the coupling positions CP of the end plates E. The coupling blocks CB formed at the corners of the cooling plate 100 extending in the first and second directions Z1 and Z2 may protrude to a certain height from the top surface 100a of the cooling plate 100. The coupling positions CP of the end plates E, that is, the receiving steps S formed on the end plates E, may be recessed from the top surface 100a of the cooling plate 100 to a certain depth.

The coupling block CB of the cooling plate 100 and the receiving step S of the end plate E may each be formed at a certain height and a certain depth based on the top surface 100a of the cooling plate 100. More specifically, the coupling block CB may protrude from the top surface 100a of the cooling plate 100 to a certain height and the receiving step S may be recessed to a certain depth from the top surface 100a of the cooling plate 100. The certain height of the coupling block CB protruding from the top surface 100a of the cooling plate 100 may be similar to or the same as the certain depth of the receiving step S recessed from the top surface 100a of the cooling plate 100. As the certain height of the coupling block CB is similar to or the same as the certain depth of the receiving step S, the coupling block CB and the receiving step S may fit each other in complementary shapes.

Referring again to FIGS. 5, 9, and 11, the insulating blocks IB may be formed at the coupling positions CP of the cooling plate 100 and the end plates E. The insulating blocks IB may be formed as the coupling blocks CB at the coupling positions CP between the end plates E and the cooling plate 100. The insulating block IB may form all or a part of the coupling block CB. For example, the insulating block IB may form all of the coupling block CB. A certain height of the coupling block CB may be formed from the cooling plate 100 by stacking a single insulating block IB or two or more different insulating blocks IB1 and IB2. The insulating block IB may also form a part of the coupling block CB. For example, the metal block MB stacked together with the insulating block IB may form another part of the coupling block CB. As such, the entire coupling block CB may be formed by stacking the insulating block IB and the metal block MB to have a certain height.

Referring to FIGS. 12 to 15, the insulating blocks IB (IBa) may be formed at the facing positions FP where the top surface 100a of the cooling plate 100 faces the bottom surfaces Ea of the end plates E as well as at the coupling positions CP where the cooling plate 100 is coupled to the end plates E. The insulating blocks IB may be formed in the receiving steps S of the end plates E that form the coupling positions CP between the end plates E and the cooling plate 100, i.e., the coupling positions CP into which the coupling members 80 are inserted. According to some embodiments of the present disclosure, the coupling positions CP may include the receiving steps S formed on the end plates E and the coupling blocks CB formed on the cooling plate 100. The coupling blocks CB protruding to a certain height from the top surface 100a of the cooling plate 100 and the receiving steps S recessed to a certain depth based on the top surface 100a of the cooling plate 100 may fit each other in complementary shapes. The coupling blocks CB formed by the insulating blocks IB may protrude to a certain height from the top surface 100a of the cooling plate 100.

The insulating block IB may be formed from the receiving step S recessed to certain depth from the top surface 100a of the cooling plate 100 along the depth direction. The receiving steps S of the end plates E formed at the coupling positions CP of the end plates E and the cooling plate 100 or the coupling blocks CB of the cooling plate 100 may include the insulating blocks IB formed to have a certain thickness from the top surface 100a of the cooling plate 100 along the coupling line where the coupling members 80 are inserted. The receiving steps S of the end plates E may be recessed to a certain depth from the top surface 100a of the cooling plate 100. The insulating blocks IB may be formed at positions exposed through the receiving steps S. For example, the insulating blocks IB may be formed to have a certain thickness in the depth direction from the receiving steps S, for example, the depth direction from the top surface 100a of the cooling plate 100.

Through this disclosure, that the insulating blocks IB (IBa) are formed as the receiving steps S mean that the insulating blocks IB (IBa) are exposed toward the coupling blocks CB through the receiving steps S. That the insulating blocks IB are formed as the coupling blocks CB may mean that the insulating block IB forms all or a part of the coupling block CB.

According to embodiments shown in FIG. 13, the insulating blocks IB (IBa) may be formed as the receiving steps S of the end plates E. The insulating blocks IB (IBa) may be formed on the receiving steps S of the end plates E along the coupling line where the coupling members 80 for coupling the end plates E to the cooling plate 100 are inserted. The insulating blocks IB (IBa) may also be formed at the facing positions FP where the end plates E face the cooling plate 100 while being formed on the receiving steps S of the end plate E at the coupling positions CP of the end plates E and the cooling plate 100. The insulating blocks IB (IBa) may be formed on the bottom surfaces Ea of the end plates E facing the cooling plate 100 and may be formed to have a certain thickness in the depth direction from the top surface 100a of the cooling plate 100, e.g., from the top surface 100a of the cooling plate 100 or from the bottom surfaces Ea of the end plates E. The insulating blocks IB (IBa) formed at the coupling positions CP of the end plates E and the cooling plate 100 and at the facing positions FP of the end plates E and the cooling plate 100 may be formed from the bottom surfaces Ea of the end plates E or the top surface 100a of the cooling plate 100 to the same level in the third direction Z3 (depth direction). In the third direction Z3, the top surface of the insulating block IB (IBa) may be formed as a flat surface, and the bottom surface of the insulating block IB (IBa) may be formed as a non-flat surface where the receiving step S is formed. In the embodiment shown in FIG. 13, the coupling block CB may be formed of the metal block MB. The bottom surface of the insulating block IB (IBa) including the bottom surface Ea of the end plate E and the receiving step S may be formed as a non-flat surface. The top surface of the insulating block IB (IBa) opposite to the receiving step S may be formed as a flat surface across the coupling positions CP and the facing position FP.

The insulating blocks IB (IBa) may be formed as the receiving steps S of the end plates E and the coupling blocks CB of the cooling plate 100 at the coupling positions CP. The insulating blocks IB (IBa) may be formed on the bottom surfaces Ea of the end plates E facing the top surface 100a of the cooling plate 100 at the facing positions FP and at the coupling positions CP including the receiving steps S of the end plates E and the coupling blocks CB of the cooling plate 100. The insulating blocks IB at the coupling positions CP and at the facing positions FP may be formed from the top surface 100a of the cooling plate 100 or the bottom surfaces Ea of the end plates E to the same level in the third direction Z3. The top surface of the insulating block IB may be formed as a flat surface crossing the coupling positions CP and the facing position FP and the bottom surface of the insulating block IB may be formed as a flat surface including the bottom surface Ea of the end plate E and the coupling block CB. According to some embodiments shown in FIG. 15, the insulating blocks IB may be formed at the coupling positions CP of the coupling blocks CB and the receiving steps S and at the facing positions FP where the top surface 100a of the cooling plate 100 faces the bottom surfaces Ea of the end plates E. The bottom surface of the insulating block IB, including the coupling blocks CB and the bottom surface Ea of the end plate E and the top surface of the insulating block IB opposite to the coupling blocks CB may be formed as a flat surface across the coupling positions CP and the facing position FP.

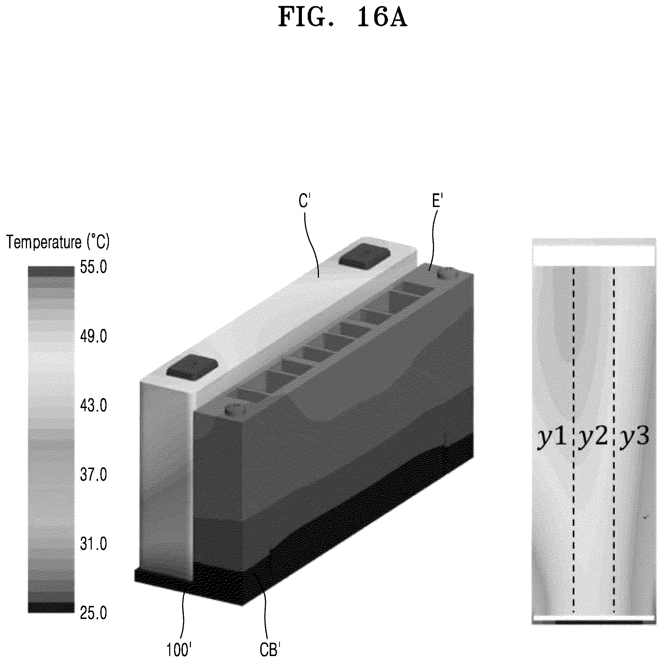

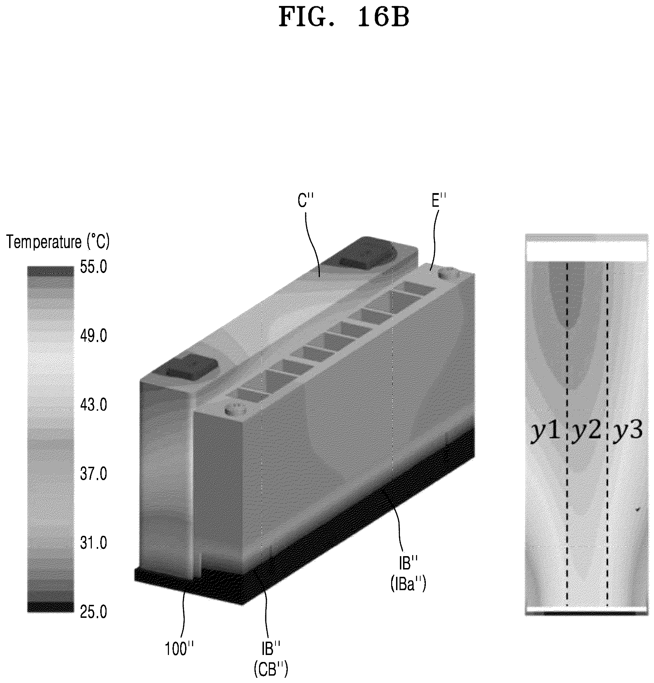

FIGS. 16A and 16B are diagrams of an example of the present disclosure and the comparative example showing results of measuring temperature variations according to positions within a battery cell.

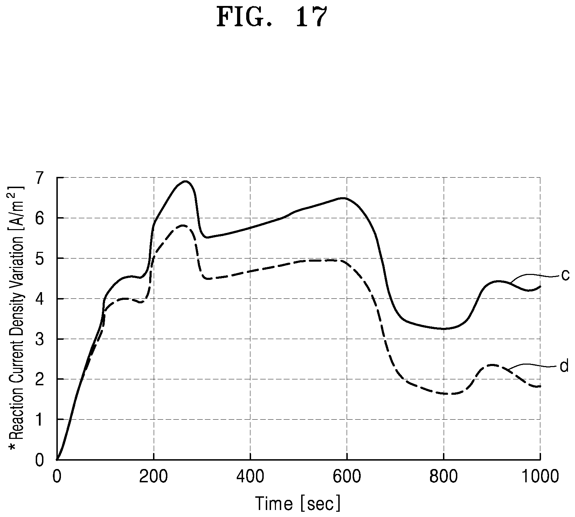

FIG. 17 is a diagram showing results of measuring variations of reaction current depending on positions within battery cells of the example of the present disclosure and the comparative example.

In the comparative example of FIG. 16A, the coupling blocks CB' are formed as metal blocks CB' positioned between the cooling plate 100' and the end plate E'. It was confirmed that the temperature variation of the battery cell C' (outermost battery cell) increased as the battery cell C' is cooled through the first path P1 from the battery cell C' (outermost battery cell) to the cooling plate 100' and the second path P2 toward the cooling plate 100' through the end plate E'. Among the three thickness portions of the battery cell C' in the first direction Z1 in which the plurality of battery cells C' are arranged, e.g., among a first thickness portion y1 facing the neighboring battery cell C', a central second thickness portion y2, and a third thickness portion y3 adjacent to the end plate E', a high temperature variation of about 6.7 °C was measured between the central second thickness portion y2 and the third thickness portion y3 adjacent to the end plate E'.

In the example of the present disclosure in FIG. 16B, unlike the comparative example of FIG. 16A, the coupling blocks CB" are formed of the insulating blocks IB" positioned between the cooling plate 100" and the end plate E". It was confirmed that the temperature variation of the battery cell C" (outermost battery cell) was reduced by allowing the heat flow along the first path P1 from the battery cell C" to the cooling plate 100" while suppressing the heat flow along the second path P2 from the battery cell C" to the cooling plate 100" through the end plates E". Among the three thickness portions of the battery cell C" in the first direction Z1 in which the plurality of battery cells C" are arranged, e.g., among a first thickness portion y1 facing the neighboring battery cell C", a central second thickness portion y2, and a third thickness portion y3 adjacent to the end plate E", a temperature variation of about 4.9 °C, which was reduced by about 27%, was measured between the central second thickness portion y2 and the third thickness portion y3 adjacent to the end plate E".

In the comparative example shown in FIG. 16A, a high temperature variation of about 7.9 °C was measured between the central battery cell C' and the outermost battery cell C' in the first direction in which the plurality of battery cells C' are arranged, among the plurality of battery cells C' forming the battery pack. However, in the example of the present disclosure shown in FIG. 16B, a temperature variation between the central battery cell C" and the outermost battery cell C" was measured to be about 4.8 °C, which was reduced by about 40% compared to the comparative example in FIG.16A.

In FIG. 17, profile c shows a variation in reaction current density (A/m²) according to the positions within the battery cell C' shown in the comparative example of FIG. 16A, wherein the reaction current density (A/m²) may be understood as the magnitude of current generated inside battery cells. Referring to the profile c of FIG. 17, among the three thickness portions of the battery cell C' (outermost battery cell) in the first direction Z1 in which the plurality of battery cells C' are arranged, e.g., among a first thickness portion y1 facing the neighboring battery cell C', a central second thickness portion y2, and a third thickness portion y3 adjacent to the end plate E', a high variation in reaction current density of about 3.3 A/m² was measured between the central second thickness portion y2 and the third thickness portion y3 adjacent to the end plate E'.

In FIG. 17, profile d shows a variation in reaction current density (A/m²) according to the positions within the battery cell C" shown in FIG. 16B, wherein the reaction current density (A/m²). Referring to the profile d of FIG. 17, among the three thickness portions of the battery cell C" (outermost battery cell) in the first direction Z1 in which the plurality of battery cells C" are arranged, e.g., among a first thickness portion y1 facing the neighboring battery cell C", a central second thickness portion y2, and a third thickness portion y3 adjacent to the end plate E", a variation in reaction current density of about 1.8 A/m², which was reduced by about 58%, was measured between the central second thickness portion y2 and the third thickness portion y3 adjacent to the end plate E".

From the experimental results in FIG. 17, it may be confirmed that the temperatures of the battery cells C' and C" directly affect the electrical output characteristics of the battery cells C' and C". It may be confirmed that the increased temperature variation depending on the positions in the battery cell C' as shown in the comparative example of FIG. 16A increases the variation in electrical output characteristics (variation in reaction current density) depending on the positions in the battery cell C', as shown in profile c of FIG. 17. It is confirmed that the reduced temperature variation depending on the positions in the battery cell C" as shown in FIG. 16B reduces the variation in electrical output characteristics (variation in reaction current density) depending on the positions in the battery cell C',' as shown in profile d of FIG. 17.

According to some embodiments of the present disclosure, the insulating blocks IB may be manufactured as separate parts from the end plates E or the cooling plate 100, and then combined with the end plates E or the cooling plate 100. The insulating blocks IB as a part of the end plates E or the cooling plate 100 may be formed as one part together with the end plates E or the cooling plate 100.

One or more embodiments include a battery pack capable of providing a uniform temperature environment for a plurality of battery cells to eliminate or alleviate temperature variation depending on positions and to eliminate or alleviate variation in electrical output characteristics due to the temperature variation by providing a heat flow along a common first path for the plurality of battery cells toward a cooling plate extending across bottom surfaces of the plurality of battery cells while suppressing a heat flow along another second path from a side of the outermost battery cell among the plurality of battery cells to the cooling plate through an end plate to alleviate or eliminate the temperature variation depending on positions between the plurality of battery cells forming the battery pack or positions within the outermost battery cell of the plurality of battery cells.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure.

## Claims

1. A battery pack comprising:
a plurality of battery cells (C) arranged in a first direction (Z1);
an end plate (E) arranged on the outside of an outermost battery cell of the plurality of battery cells (C) in the first direction (Z1);
a cooling plate (100) extending across bottom surfaces (12) of the plurality of battery cells (C); and
an insulating block (IB) positioned at a coupling position (CP) between the end plate (E) and the cooling plate (100).

2. The battery pack as claimed in claim 1, wherein a coupling member (80) couples the end plate (E) and the cooling plate (100) inserted in a coupling line which extends through the coupling position (CP).

3. The battery pack as claimed in one of the claims 1 to 2, wherein the cooling plate (100) extends across a bottom surface of the end plate (E) and the bottom surfaces (12) of the plurality of battery cells (C) arranged in the first direction (Z1), and
wherein the bottom surface of the end plate (E) is coupled to a top surface (100a) of the cooling plate (100) at the coupling position such that the bottom surface of the end plate (E) and the top surface (100a) of the cooling plate (100) face each other.

4. The battery pack as claimed in one of the claims 1 to 3, wherein the insulating block (IB) comprises a coupling block (CB) extending a height from a top surface (100a) of the cooling plate (100),
wherein a receiving step (S) is recessed to a depth from a bottom surface of the end plate (E),
wherein the coupling block (CB) and the receiving step (S) are formed in complementary shapes, and
wherein the coupling block (CB) is fitted to the receiving step (S).

5. The battery pack as claimed in claim 4, wherein the insulating block (IB) forms an entirety or a part of the coupling block (CB).

6. The battery pack as claimed in claim 5, wherein the insulating block (IB) protrudes from the cooling plate (100) to the receiving step (S) of the end plate (E) to form the entirety of the coupling block (CB).

7. The battery pack as claimed in claim 6, wherein the insulating block (IB) comprises a single insulating block provided on the cooling plate (100) or comprises at least two different insulating blocks (IB1, IB2) stacked on the cooling plate (100).

8. The battery pack as claimed in claim 5, wherein the insulating block (IB) is stacked on a metal block (MB) provided on the cooling plate (100) to form part of the coupling block (CB), and the insulating block (IB) and the metal block (MB) protrude from the top surface (100a) of the cooling plate (100) to a height that is complementary to the depth formed by the receiving step (S) of the end plate (E).

9. The battery pack as claimed in one of the claims 4 to 8, wherein the receiving step (S), which is recessed to a depth from the bottom surface of the end plate (E), is coupled to the coupling block (CB), which protrudes to a height from the top surface (100a) of the cooling plate (100).

10. The battery pack as claimed in one of the claims 4 to 9, wherein the coupling block (CB) protrudes from both sides in a second direction (Z2) intersecting the first direction (Z1),
wherein the receiving step (S) of the end plate (E) is recessed from both sides in the second direction (Z2) intersecting the first direction (Z1), and
wherein the top surface (100a) of the cooling plate (100) between both sides of the coupling block (CB) faces the bottom surface of the end plate (E) between both sides of the receiving step (S).

11. The battery pack as claimed in claim 10, wherein the insulating block (IBa) is provided at a coupling position (CP) for coupling the end plate (E) and the cooling plate (100) to each other and at a facing position (FP) where the end plate (E) faces the cooling plate (100).

12. The battery pack as claimed in claim 11, wherein the insulating block (IBa) at the facing position (FP) is formed on the bottom surface of the end plate (E) that faces the top surface (100a) of the cooling plate (100), and/or
wherein the insulating block (IBa) at the facing position (FP) is formed with a thickness in a depth direction from the bottom surface of the end plate (E) or the top surface (100a) of the cooling plate (100).

13. The battery pack as claimed in claim one of the claims 1 to 3, wherein a coupling block (CB) has a height from a top surface (100a) of the cooling plate (100) and the insulating block (IBa) forms a receiving step (S) on a bottom surface of the insulating block (Iba) that is recessed to a depth with the coupling block (CB) and the receiving step (S) being fitted to each other with complementary shapes, and
wherein the top surface (100a) of the cooling plate (100) between both sides of the coupling block (CB) faces a bottom surface of the insulating block (IBa) between both sides of the receiving step (S).

14. The battery pack as claimed in claim 13, wherein the coupling block (CB) is at least partly formed as a metal block (MB).

15. The battery pack as claimed in one of the claims 13, wherein the coupling block (CB) is formed as another insulating block (IB).
